# EUROPEAN PATENT APPLICATION

(11) **EP 3 010 122 A1**
(43) Date of publication of application: **20.04.2016**
(21) Application number: 14188591.3
(22) Date of filing: 13.10.2014
(51) Int. Cl.: H02K 5/22, H02K 11/00, H01R 13/68, H02H 7/08

(54) **Connector**

(71) Applicant: Multi-Holding AG, 4123 Allschwil (CH)
(72) Inventor: Schull, Frédéric, 68210 Hagenbach (FR)
(74) Representative: Frischknecht, Harry Ralph

(57) **Abstract**

Connector (4) for a three-phase electrical machine (M) comprising three windings (U, V, W) each of the windings (U, V, W) having a first connection point (U1, V1, W1) and a second connection point (U2, V2, W2), said connector (4) comprising
one connection circuit (1, 2, 3) per winding (U, V, W), wherein each of said connection circuits (1, 2, 3) is provided with
- an external interface (5) configured to be connected to an external cable (6);
- a connection interface (7) having two connection points (8, 9), which are configured to be electrically connected to the connection points (U1, V1, W1; U2, V2, W2) of said windings (U, V, W); and
- an internal electrical path (10) connecting the external interface (5) with the two connection points (8, 9) of the connection interface (7) electrically;

wherein each of the internal electrical paths (10) comprises a protection element (11) which is configured to interrupt said internal electrical path (10) upon a failure state, in particular upon a failure state within said three-phase electrical machine (M).

## Description

### TECHNICAL FIELD

The present invention relates to a connector for a three-phase electrical machine according to claim 1 and to a three-phase electrical machine according to claim 13.

### PRIOR ART

Three-phase electrical machines are known from prior art. In particular three-phase motors are known. Three-phase motors can be used in a wide variety of technical fields.

In particular in the railway industry such three-phase motors are used in the locomotive. In use a short-circuit within the motor may occur. Such a short circuit may lead to a significant raise in temperature in neighboring windings of the motor. Eventually this raise in temperature can lead in the worst case to a fire win the motor.

Furthermore as the motor comprises permanent magnets further current is created inside the motor even when the motor is not supplied in current by the inverters anymore. The magnetic field from the permanent magnet is seen as variable by the stator coils, due to the rotation of the rotor that cannot be stopped in rotation immediately, specifically when mounted on a train that can stop moving only after several kilometer. As a result, in case of existing short circuit in the stator, the current of the short circuit cannot be stopped inside the coils (versus the state of art) Said further current is provided for example through the movement of the train. Said additional current has the same negative impact in case of a short circuit.

Given the constraints in terms of motor design it is almost impossible to change their construction in order to enhance security.

### SUMMARY OF THE INVENTION

It is an object of the invention to provide a protection system for a three-phase electrical machine that can be used in a flexible manner. In particular it is an object to provide a protection system with which no changes or only minor changes with regard to the structure of the three-phase electrical machine are necessary.

This object is solved by the connector according to claim 1. Accordingly a connector for a three-phase electrical machine comprising three windings each of the windings having a first connection point and a second connection point, comprises one connection circuit per winding. Each of said connection circuits is provided with
- an external interface configured to be connected to an external cable or a bus bar;
- a connection interface having two connection points, which are configured to be electrically connected to the connection points of said windings; and
- an internal electrical path connecting the external interface with the two connection points of the connection interface electrically.

Each of the internal electrical paths comprises a protection element which is configured to interrupt said internal electrical path upon a failure state, in particular upon a failure state within said three-phase electrical machine.

The protection element that is part of the connector interrupts thereby the electrical circuit which connects neighboring windings upon a failure state. The protection element is preferably arranged externally with regard to the three-phase machine within the connector. The arrangement within the connector has the advantage that a protection element can be arranged outside of the motor and therefore no changes in the motor design are necessary. Furthermore easy access to the protection element can be provided in case maintenance with regard to the protection element or a replacement of the same should be necessary.

The internal electrical path of the connector can also be designated as internal electrical circuit. Said internal electrical path can be provided by means of a circuit board or by any other electrical means including cables, rigid connectors or the like.

Preferably said connector comprises three connection circuits, namely a first, a second and a third connection circuit.

The first connection circuit has, as described above, two connection points which can be brought in an electrical connection with said connection points of said windings. One of said connection points of said connection circuit is configured to be connected to a first connection point of a first winding and the other of said connection points of said connection circuit is configured to be connected to a second connection point of the third winding.

The second connection circuit has, as described above, two connection points which can be brought in an electrical connection with said connection points of said windings. One of said connection points of said connection circuit is configured to be connected to a first connection point of the third winding and the other of said connection points of said connection circuit is configured to be connected to a second connection point of the second winding.

The third connection circuit has, as described above, two connection points which can be brought in an electrical connection with said connection points of said windings. One of said connection point of said connection circuit is configured to be connected to a first connection point of a second winding and the other of said connection points of said connection circuit is configured to be connected to a second connection point of the first winding.

The connection of the first, second and third connection circuits allow a delta-connection of the three-phase electrical machine.

Alternatively it is also possible to design the internal electrical path such that a star-connection of the three-phase electrical machine is possible. Thereby the internal electrical path comprises a star intersection to which said protection elements are in an electrical connection.

The circuit as described above therefore provides a protection element that is part of the internal electrical path of the connector between a connection point of a winding and between a connection point of a neighboring winding. Hence between two neighboring windings there is a protection element arranged.

Preferably said windings together with the connection circuits are arranged in a delta-connection, wherein the electrical connection of neighboring windings is achieved via the connector, namely via the connection points, the internal electrical path and the protection element. One of the two connection points of a winding is in connection with the connection point of the connector. The connection point of the connector leads to the internal electrical path which comprises the protection element. The internal electrical path leads then to the other connection point of the connector which is in connection with a connection point of a further winding. Hence the current path is as follows: connection point of winding to connection point of connector to internal electrical path to protection element to further connection point of connector to a connection point of a neighboring winding. Either before or after the protection element the internal electrical path is further in an electrical connection with the external interface.

In other words: The internal electrical path of the connectors provides an electrical connection between connection points of neighboring windings and said electrical connection is interruptable by means of the protection element.

As outlined above a star-connection is also possible, whereby the protection element interrupts also an electrical path towards or from the winding.

Said protection element is preferably a fuse or a switch or bimetallic thermal cutout. The fuse or the switch can be provided in various shapes.

The protection element is adapted to interrupt the internal electrical path or the electrical path between two windings, respectively based on a failure state within the motor. The protection element is for example configured to determine an increase in temperature and based on this increase to interrupt the circuit. In another embodiment the protection element is for example configured to determine an increase in current and based on this increase to interrupt the circuit.

Preferably said protection element is arranged between the two connection points of the respective connection circuit, so as to interrupt the electrical connection between the two connection points. As the connection points are in connection with the connection points of the two neighboring windings the electrical connection between said windings will be interrupted.

Preferably said protection element is configured as resettable protection element. This means that the protection element can be brought from an electrically non-conducting state into an electrically conducting state. Alternatively said protection element is configured as irreversible protection element. This means that upon the protection element has detected a failure state, it is not possible to bring the protection element from the electrically non-conducting state into an electrically conducting state anymore. According to a further alternative, said protection element is configured as replaceable protection element. The latter means that the protection element has to be replaced upon interruption.

Preferably said connector comprises a housing and said protection element is arranged inside said housing.

Further preferably said internal electrical path with said protection element is arranged inside said housing of said connector. In other words: the protection element is arranged inside the housing of the connector and is therefore external with regard to the three-phase machine. External means with this regard as not being part of the three-phase machine.

Preferably said housing comprises sidewalls delimitating an inner space in which the internal electrical path and the protection element is arranged. Preferably external interface and said connection interface penetrate the sidewall of said housing. Hence the electrical path is guided through the sidewall.

As mentioned above the protection element is preferably arranged externally with regard to the three-phase electrical machine and is part of the connector.

Said external interface is preferably in a fixed connection with said external cable. Therefore in this embodiment the external cable is for example welded or clamped to the external interface. In an alternative embodiment the external interface and the external cable are in connection via a plug- and socket-connector. Thereby the end of the cable can be the pin side und the external interface is the socket side or vice-versa.

Preferably the connection points of the connector are provided as pin-side or socket-side plugs configured to be connected to the connection points of said windings which are designed as counterparts to said connection points of the connector in the shape as pin-side or socket-side plugs. Hence the connector can be plugged in with regard to the three-phase electrical machine. Alternatively in particular in the embodiment with the integration within a terminal box as described below in greater detail, there may also be a physical connection between the connection points, in particular a welded or a soldered connection.

Preferably the connector is provided as separate part from said three-phase electrical machine. Hence the connector can also be replaced very easily without any further manipulation with regard to the electrical machine. Further it is possible to disconnect the connector very easily from the electrical machine. Alternatively the connector with the connection circuit is provided as an integral part of said three-phase electrical machine, which means that the parts of the connection circuit are arranged within a terminal block of the three-phase electrical machine. In other words: the connection circuit is an integral part of a terminal block of the three-phase electrical machine. In other words the connector can be a built in part that is arranged within said terminal block. The alternative has the advantage that the protection element is still arranged at a distance to the winding and that the protection elements are accessible from the outside of the electrical machine simply by accessing said terminal block. The protection element as well as the internal electrical path are arranged within the terminal block. The housing of the connector can be the housing or part of the housing of the terminal block.

In other words: Said connector can be provided in the shape of a terminal box for a three-phase electrical machine or it can be provided as connector to be connected to the three-phase electrical machine, in particular to the terminal box.

Preferably said internal electrical path comprises a chip module with at least one sensor module configured to monitor electrical or physical parameters of said three-phase electrical machine or the connector and/or to monitor the state of said protection element. An electrical parameter is for example the current flowing through the windings and the therefore also through the internal electrical path. A physical parameter is for example the temperature in the vicinity of the windings of the three-phase machine. The term vicinity is to be understood that the temperature is monitored close to the windings, but preferably outside of the three-phase machine.

Preferably - in addition to said chip module - a communication module is provided, which communication module is configured to transfer a set of data obtained by said chip module with the at least one sensor module. Hence the connector is provided with communication possibilities in order to provide data for the environment surrounding the electrical machine, for example for a control circuit of a locomotive.

An electrical three-phase machine comprises three windings each of the windings having a first connection point and a second connection point. Said electrical machine further comprising a connector according to the description above.

Preferably said connection points of said windings are arranged on a terminal block of the electrical machine. The terminal block is arranged such that it is accessible from the exterior of the electrical machine so as to be brought in an electrical connection with said connector.

Preferably said terminal block is configured as connector part to which said connector can be plugged in. Therefore the connection points of the connector and the connection points of the windings which are lead to the terminal block are electrically connected at the interface between the connector and the terminal block. The terminal block is designed as plug- or socket-connector and the connector is designed as socket- or plug-connector. Hence the connector can be plugged in with regard to the three-phase electrical machine, namely with regard to the terminal block. The connector can be plugged into the terminal block. Alternatively - as mentioned above - the connector with the connection circuit is an integral part of the terminal block. In this alternative the connection points of the connector and the connection points of the windings which are lead to the terminal block are electrically connected within the terminal block. Furthermore the protection element is arranged within the terminal block.

Further embodiments are claimed in the dependent claims.

### SHORT DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1: shows a schematic view of a connector and of a three-phase electrical machine in a delta-connection configuration; and
- Fig. 2: shows a schematic view of the connector and the three-phase electrical machine in a star-connection configuration.

### DESCRIPTION OF PREFERRED EMBODIMENTS

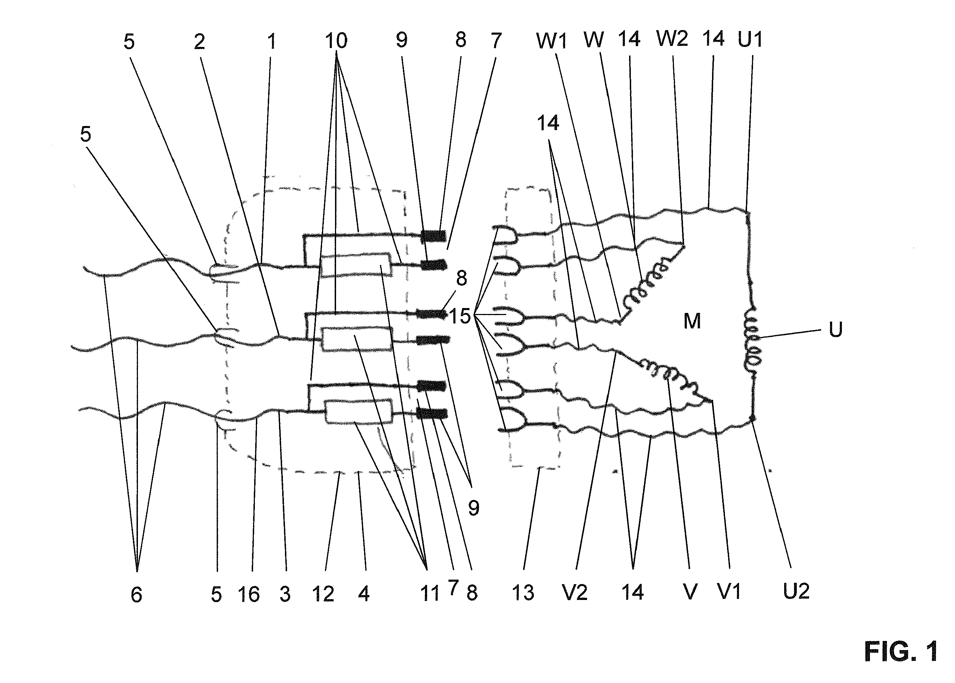

Figure 1 shows a connector 4 and a three-phase electrical machine M. The connector 4 is configured to be connected to the three-phase electrical machine M.

The three-phase electrical machine M comprises three windings U, V, W. Each of the windings U, V, W has a first connection point U1, V1, W1 and a second connection point U2, V2, W2. The connection points U1, V1, W1; U2, V2, W2 are electrical connection points and the windings U, V, W are in contact with each other via said connection points U1, V1, W1; U2, V2, W2. In the present embodiment the three windings U, V, W are in a delta connection with each other. The connection points U1, V1, W1; U2, V2, W2 are accessible via a terminal block 13. The terminal block 13 serves as interface for the connector 4 and allows a contact between the three-phase electrical machine M and the connector 4. As it can be seen from figure 1 the connection points U1, V1, W1; U2, V2, W2 are in an electrical connection with the terminal block 13 via electrical lines 14.

The terminal block 13 to which the connection points U1, V1, W1; U2, V2, W2 are in electrical connection via the electrical lines 14 comprises in this embodiment connection parts 15 to which the connector 4 can be plugged in. Speaking in an electrical sense the connection part 15 or the terminal block 13, respectively serves as connection points in the sense of the connection points U1, V1, W1; U2, V2, W2. The windings U, V, W are electrically contactable via the connection parts 15.

The connector 4 comprises one connection circuit 1, 2, 3 per winding U, V, W. Each of said connection circuit 1, 2, 3 is provided with an external interface 5, configured to be connected to an external cable 6, a connection interface 7 having two connection points 8, 9 and an internal electrical path 10 which connects the external interface 5 with the two connection points 8, 9 of the connection interface 7 electrically. The external interface 5, the connection interface 7 and the internal electrical path 10 are part of the connector 4.

The external cable 6 serves mainly to provide electrical power to the three-phase electrical machine M, if the machine M is a motor. The external cable 6 may also serve as power line to supply the power that is generated by the three-phase electrical machine M, in case it is a generator.

The connection points 8, 9 are configured to be connected to the connection points U1, V1, W1; U2, V2, W2 of said windings U, V, W. Thereby the windings U, V, W are electrically connected with each other via the internal electrical path 10. Each of the internal electrical path 10 comprises a protection element 11 which is configured to interrupt said internal electrical path 10 upon a failure state. The failure state can be a failure within said three-phase electrical machine M, such as a short circuit or other defects. The failure state can also be in the surrounding of the three-phase electrical machine M, such as a fire or any other negative influence which influences the functioning of the electrical machine M.

In the present embodiment the first connection circuit 1 is in electrical connection with the winding U and the winding W. Thereby, one of the connection points 8 of the first connection circuit 1 is electrically connected to a first connection point U1 of the first winding U and the other of said connection points 9 of the first connection circuit 1 is electrically connected to a second connection point W2 of the third winding W. The protection element 11 that is arranged in the first connection circuit 1 is located between said two connection points 8, 9. Therefore the protection element 11 is located between the first connection point U1 of the winding U and the second connection point W2 of the winding W.

The second connection circuit 2 is in connection with the winding V and the winding W. The connection point 8 of the second connection circuit 2 is thereby in connection with the first connection point W1 of the winding W and the other connection point 9 of the second connection circuit 2 is in connection with the second connection point V2 of the winding V. The protection element 11 that is arranged in the second connection circuit 2 is located between said two connection points 8, 9. Therefore the protection element 11 is located between the first connection point W1 of the winding W and the second connection point V2 of the winding V.

The third connection circuit 3 is in connection with the winding U and the winding V. The connection point 8 of the third connection circuit 3 is configured to be connected to a first connection point V1 of the winding V and the other connection point 9 of the third connection circuit 3 is configured to be connected to a second connection point U2 of the winding U. The protection element 11 that is arranged in the third connection circuit 3 is located between said two connection points 8, 9. Therefore the protection element 11 is located between the first connection point V1 of the winding V and the second connection point U2 of the winding U.

With regard to the connector 4 it can be seen that the connection points 8, 9 are in connection with the external interface 5 via said internal electrical path 10. The internal electrical path 10 can be provided with electrical lines 16. The electrical lines 16 and therefore also said internal electrical path 10 can be provided in a wide variety of technical elements such as cables or circuit boards or any other element that can transmit electrical power.

The protection element 11 is preferably a fuse or a switch or bimetallic thermal cutout. Thereby the protection element 11 is arranged between the two connection points 8, 9 of the respective connection interface 1, 2, 3 which means also that the protection element 11 is arranged between two connection points 8, 9 of the connector 4.

According to one variant the protection element 11 is configured as a resettable protection element. This means that the protection element 11 interrupts the internal electrical path 10 as long as the failure state is present. In case the failure state seizes to exist, the protection element 11 will be resetted automatically and the internal electrical path 10 is no longer interrupted. It is also possible that the protection element 11 has to be resetted by a person upon inspection of the failure state. According to another variant the protection element 11 is configured as irreversible protection element 11. This means that the protection element 11 has to be replaced upon it has been actuated based of failure state.

The connector 4 comprises a housing 12 and inside the housing there is arranged the protection element 11 as well as the internal electrical path 10. The housing 12 can be a conventional housing of a connector 4 and it is shown by a broken line. The external interface 5 and the connection interface 7 of the connector 4 are also part of the connector 4 and are arranged in a mechanical connection with the housing 12. Preferably the external interface 5 and the connection interface 7 penetrate sidewalls of the housing 12 so that the external interface 5 and the connection interface 7 are accessible from the outside of the housing 12.

With the arrangement of the protection element 11 within the connector 4 the protection element 11 is arranged externally with regard to the three-phase electrical machine M. This has the advantage that the three-phase electrical machine M can be provided as common three-phase electrical machine M without the arrangement of a protection element inside the three-phase electrical machine M.

The external interface 5 of the connector 4 can be in a fixed connection with said external cable 6. This means that the external cable 6 is welded, soldered or clamped to the external interface 5. In alternative embodiment the external interface 5 and said external cable 6 are in connection via a plug- and socket-connector. Thereby the external cable 6 can be plugged in into the external interface 5.

The connection points 8, 9 of the connector 4 are preferably provided as pin-side or socket-side plugs configured to be connected to the connection points U1, V1, W1; U2, V2, W2 of said windings U, V, W. The connection points U1, V1, W1; U2, V2, W2 of the three-phase electrical machine M that are guided to the terminal block 13 are also provided as pin-side or socket-side plugs which are designed such that the pin-side or the socket-side plugs of the connection points 8, 9 of the connector 4 can be connected to the respective terminal block 13. Hence the connector 4 and the terminal block 13 are provided as plugs and sockets. This means that the connector 4 can be plugged in into the terminal block 13. Preferably the terminal block 13 is designed as socket-side and the connector 4 is designed as plug-side. However, the arrangement can also be vice-versa.

As mentioned above the connector 4 is in the shown embodiment designed as being a separate part of the three-phase electrical machine M. In an alternative embodiment that is not shown in the figures, the connector 4 is an integral part of the three-phase electrical machine M, in particular the connector 4 is an integral part of the terminal block 13. The herein mentioned features can be applied mutatis mutandis onto this alternative embodiment. This applies in particular to the electrical circuitry.

In a preferred embodiment the internal electrical path 10 comprises a chip module that is not shown in the drawing. Said chip module comprises at least one sensor module configured to monitor electrical or physical properties of said three-phase electrical machine M and/or to monitor the state of said protection element 11. It is thereby possible to obtain information with the sensor module concerning the state of the electrical machine M as such. Additionally said sensor module can also monitor electrical or physical parameters of the connector 4, in particular said protection element 11.

In addition to said chip module a communication module can also be provided. With the communication module it is possible to transfer a set of data obtained by said chip module with the at least one sensor module to a unit that processes said data further.

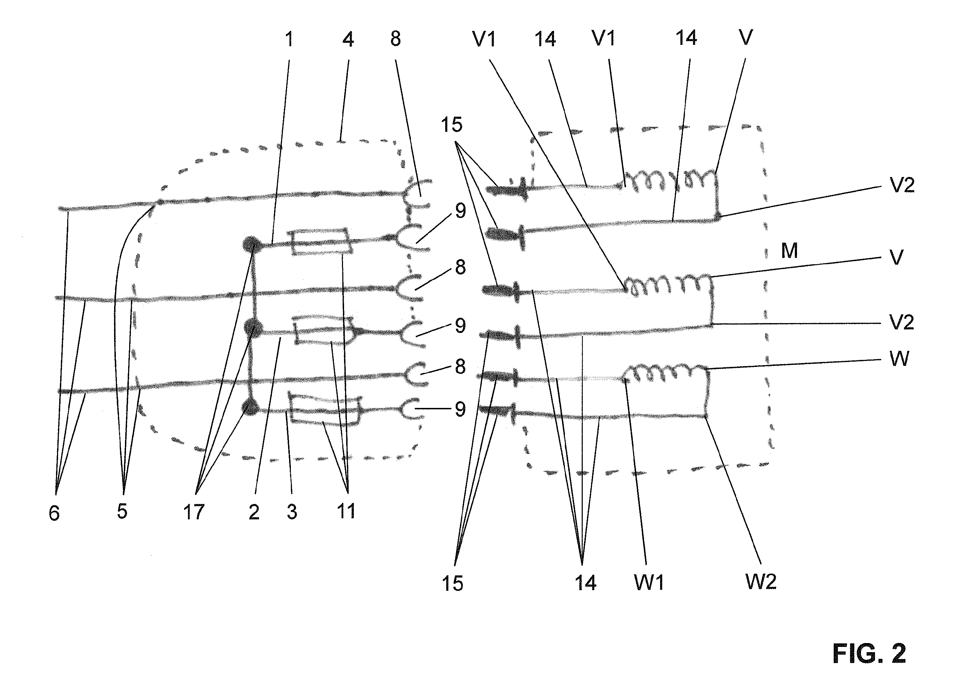

Figure 2 shows connector 4 according to figure 1, whereas the internal electrical path 10 is arranged such that the electrical machine M is provided with a star-connection rather than a delta connection. For that reason the electrical path 10 comprises a star point 17 to which said protection elements 11 are connected to. In case of a failure state the protection element 11 interrupt the internal electrical path 10.

### LISTE OF REFERENCE SIGNS

- 1: first connection circuit
- 2: second connection circuit
- 3: third connection circuit
- 4: connector
- 5: external interface
- 6: external cable
- 7: connection interface
- 8: connection point
- 9: connection point
- 10: internal electrical path
- 11: protection element
- 12: housing
- 13: terminal block
- 14: electrical lines
- 15: connection parts
- 16: electrical lines
- 17: star point
- M: three-phase electrical machine
- U1, V1, W1: first connection points
- U2, V2, W2: second connection points
- U, V, W: windings

## Claims

1. Connector (4) for a three-phase electrical machine (M) comprising three windings (U, V, W) each of the windings (U, V, W) having a first connection point (U1, V1, W1) and a second connection point (U2, V2, W2), said connector (4) comprising
one connection circuit (1, 2, 3) per winding (U, V, W), wherein each of said connection circuits (1, 2, 3) is provided with
- an external interface (5) configured to be connected to an external cable (6) or a busbar;
- a connection interface (7) having two connection points (8, 9), which are configured to be electrically connected to the connection points (U1, V1, W1; U2, V2, W2) of said windings (U, V, W); and
- an internal electrical path (10) connecting the external interface (5) with the two connection points (8, 9) of the connection interface (7) electrically;
wherein each of the internal electrical paths (10) comprises a protection element (11) which is configured to interrupt said internal electrical path (10) upon a failure state, in particular upon a failure state within said three-phase electrical machine (M).

2. Connector (4) according to claim 1, **characterized**
**in that** said connector (4) is configured to be interconnected with the three-phase electrical machine (M) as a delta-connection and comprises three connection circuits (1,2, 3) wherein,
- with regard to the first connection circuit (1) one of said connection point (8) is configured to be connected to a first connection point (U1) of a first winding (U) and the other of said connection points (9) is configured to be connected to a second connection point (W2) of the third winding (W);
- with regard to the second connection circuit (2) one of said connection point (8) is configured to be connected to a first connection point (W1) of the third winding (W) and the other of said connection points (9) is configured to be connected to a second connection point (V2) of the second winding (V); and
- with regard to the third connection circuit (3) one of said connection point (8) is configured to be connected to a first connection point (V1) of a second winding (V) and the other of said connection points (9) is configured to be connected to a second connection point (U2) of the first winding (U)
or in that said connector (4) is configured to be interconnected with the three-phase electrical machine (M) as a star-connection.

3. Connector (4) according to claim 1 or 2, **characterized in that** said protection element (11) is fuse or a switch or a bimetallic thermal cutout.

4. Connector (4) according to one of the preceding claims, **characterized in that** said protection element (11) is arranged between the two connection points (8, 9) of the respective connection circuit (1, 2, 3) so as to interrupt the electrical connection between the two connection points (8, 9) of the respective internal electrical path (10).

5. Connector (4) according to one of the preceding claims, **characterized in that** said protection element (11) is configured as resettable protection element (11) or **in that** said protection element (11) is configured as irreversible protection element (11) or **in that** said protection element (11) is configured as replaceable protection element (11).

6. Connector (4) according to one of the preceding claims, **characterized in that** said connector (4) comprises a housing (12) and **in that** said protection element (11) is arranged inside said housing (12).

7. Connector (4) according to claim 6, **characterized in that** said internal electrical path (10) with said protection element (11) is arranged inside said housing (12) of said connector.

8. Connector (4) according to claim 6 or 7, **characterized in that** said external interface (5) and said connection interface (7) penetrate said sidewall of said housing.

9. Connector (4) according to one of the preceding claims, **characterized in that** said protection element (11) is arranged externally with regard to the three-phase electrical machine (M).

10. Connector (4) according to one of the preceding claims, **characterized in that** said external interface (5) is in a fixed connection with said external cable (6) or bus bar or **in that** said external interface (5) and said external cable (6) or bus bar are in connection via a plug- and socket-connector.

11. Connector (4) according to one of the preceding claims, **characterized in that** the connection points (8, 9) of the connector (4) are provided as pin-side or socket-side plugs configured to be connected to the connection points (U1, V1, W1; U2, V2, W2) of said windings (U, V, W).

12. Connector (4) according to one of the preceding claims, **characterized in that** the connector (4) is provided as separate part from said three-phase electrical machine (M) or **in that** the connector (4) is provided as an integral part of said three-phase electrical machine (M), wherein preferably said connector (4) is an integral part of a terminal block (13) of the three-phase electrical machine (M)

13. Connector (4) according to one of the preceding claims, **characterized in that** said internal electrical path (10) comprises a chip module with at least one sensor module configured to monitor electrical or physical parameters of said three-phase electrical machine (M) or the connector (4) and/or to monitor the state of said protection element (11), wherein optionally in addition to said chip module a communication module is provided, which communication module is configured to transfer a set of data obtained by said chip module with the at least one sensor module.

14. Electrical three-phase machine (M) comprising three windings (U, V, W) each of the windings (U, V, W) having a first connection point (U1, V1, W1) and a second connection point (U2, V2, W2) and a connector (4) according to one of the preceding claims.

15. Electrical three phase machine (M) according to claim 14, **characterized in that** said connection points (U1, V1, W1; U2, V2, W2) of said windings (U, V, W) are arranged on a terminal block (13) of the electrical machine (M).

16. Electrical three-phase machine (M) according to claim 14, wherein said terminal block (13) is configured as connector part to which said connector (4) can be plugged in or wherein said connector (4) is an integral part of said terminal block (13).
